# FASCICULE DE BREVET EUROPEEN

(11) **EP 0 848 175 B1**
(45) Date de publication et mention de la délivrance du brevet: **29.09.2004**
(21) Numéro de dépôt: 97402927.4
(22) Date de dépôt: 03.12.1997
(51) Int. Cl.: F16D 3/76, F16D 3/00

(54) **Dispositif d'accouplement permanent de deux arbres**
Feste Kupplungseinrichtung für zwei Wellen
Permanent coupling device for two shafts

(30) Priorité: 13.12.1996 FR 9615482
(43) Date de publication de la demande: 17.06.1998
(73) Titulaire: LEMFORDER NACAM S.A., 41100 Vendome (FR)
(72) Inventeur: Couallier, Antoine, 41190 Herbault (FR); Laisement, André, 41290 La Chapelle Encherie (FR); De Rincquesen, Benoît, 41100 Vendome (FR)
(74) Mandataire: Cabinet Martinet & Lapoux

(56) Documents cités:
- EP-A- 0 145 572
- EP-A- 0 392 858
- FR-A- 2 041 830
- FR-A- 2 374 554
- FR-A- 2 544 816
- FR-A- 2 556 429
- FR-A- 2 637 334
- FR-E- 74 821
- GB-A- 531 924
- GB-A- 821 207
- GB-A- 837 659
- US-A- 2 562 359
- US-A- 4 983 143

## Description

La présente invention est relative à un dispositif d'accouplement permanent de deux arbres aptes à tourner suivant un axe commun.

Le dispositif d'accouplement permanent selon l'invention est plus particulièrement destiné à être monté sur une colonne de direction de véhicule automobile. On connaît des dispositifs d'accouplement permanents de deux arbres de colonne de direction de véhicule automobile, qui mettent en oeuvre par encliquetage des systèmes mécaniques avec blocage. D'autres dispositifs d'accouplements permanents associent de façon permanente deux arbres au moyen d'un élément intermédiaire en caoutchouc, de façon à avoir un accouplement qui absorbe des vibrations et de légers désaxements, comme c'est le cas des documents US-A-4 983 143, EP-A-0 392 858 et FR-A-2 637 334. Ces derniers dispositifs doivent comporter en plus un système de sécurité d'entraînement en rotation en cas de dégradation ou de détérioration du caoutchouc. Le système de sécurité le plus souvent utilisé consiste en une clé mécanique entre les deux arbres. Ces différents dispositifs sont assez complexes, et entraînent des difficultés de réalisation de l'arbre recevant l'élément intermédiaire en caoutchouc.

Le but de la présente invention est de proposer un dispositif d'accouplement permanent qui soit flexible, et qui ait une architecture simple à réaliser, afin d'éviter les inconvénients décrits ci-dessus.

Selon l'invention, le dispositif d'accouplement permanent de deux arbres aptes à tourner suivant un axe commun comporte :
- un ensemble monobloc qui comprend :
   . un ensemble tubulaire intermédiaire disposé entre l'arbre extérieur et l'arbre intérieur ; et
   . un élément élastique en une seule partie disposé entre l'arbre intérieur et l'ensemble tubulaire intermédiaire, et étant directement solidarisé avec l'arbre intérieur, et avec l'ensemble tubulaire intermédiaire de manière à constituer l'ensemble monobloc,
- l'ensemble monobloc étant monté dans une face intérieure de l'arbre extérieur afin d'assurer une liaison en rotation et une liaison axiale entre l'arbre extérieur et l'ensemble monobloc.

Le dispositif est caractérisé en ce que :
- l'ensemble tubulaire intermédiaire est constitué par un élément tubulaire intermédiaire en une seule partie, qui comporte un corps entourant l'élément élastique et un rétrécissement agencé à une première de ses extrémités en dehors dudit élément élastique qui se prolonge jusqu'à la deuxième extrémité, ledit rétrécissement étant monté dans la face intérieure de l'arbre extérieur ;
- des moyens de liaison en rotation entre l'arbre extérieur et ledit rétrécissement de l'élément tubulaire intermédiaire de l'ensemble monobloc ;
- des moyens de liaison axiale entre l'arbre extérieur et ledit rétrécissement de l'élément tubulaire intermédiaire ;
- des moyens de sécurité de la liaison en rotation entre l'arbre intérieur et ledit rétrécissement de l'élément tubulaire intermédiaire.

Dans d'autres variantes de réalisation, l'ensemble tubulaire intermédiaire comporte l'élément tubulaire intermédiaire et un élément tubulaire supplémentaire en une seule partie, qui sont solidaires l'un avec l'autre. L'élément élastique est directement solidarisé avec l'élément tubulaire supplémentaire et avec l'arbre intérieur de manière à constituer un sous-ensemble monobloc, qui se monte dans le logement du corps de l'élément tubulaire intermédiaire.

Avantageusement, les moyens de liaison en rotation du dispositif d'accouplement permanent selon l'invention consistent en un emmanchement du rétrécissement de l'élément tubulaire intermédiaire dans l'arbre extérieur. Cet emmanchement est réalisé par une zone mâle ou portée circulaire du rétrécissement de l'élément tubulaire intermédiaire et par une zone femelle ou face intérieure de l'arbre extérieur, qui sont munies de dentures de formes conjuguées qui coopèrent l'une avec l'autre.

Afin de garantir l'accouplement dans le sens axial, les moyens de liaison axiale entre l'arbre extérieur et le rétrécissement de l'élément tubulaire intermédiaire de l'ensemble monobloc comprennent :
- un épaulement entre la portée circulaire du rétrécissement et une portion de corps de l'élément tubulaire intermédiaire, une face d'appui de l'arbre extérieur étant appliquée contre ledit épaulement ;
- une déformation à une extrémité libre de ladite portée circulaire qui coopère et s'applique par sertissage contre une forme évasée aménagée sur la face intérieure de l'arbre extérieur ; et
- ladite face d'appui étant située à l'extrémité de la face intérieure circulaire du côté du corps de l'élément tubulaire intermédiaire, et ladite forme évasée étant située à l'autre extrémité de ladite face intérieure circulaire.

Dans une variante de réalisation, les moyens de liaison axiale entre l'arbre extérieur et le rétrécissement de l'élément tubulaire intermédiaire de l'ensemble monobloc comprennent :
- un bourrelet aménagé sur une extrémité de la portée circulaire du rétrécissement du côté de l'élément élastique, et sur lequel vient s'appliquer une face d'appui de l'arbre extérieur ; et
- une déformation à une extrémité libre de ladite portée circulaire qui coopère et s'applique par sertissage contre une forme évasée aménagée sur la face intérieure de l'arbre extérieur.

Dans une autre variante de réalisation, les moyens de liaison en rotation et les moyens de liaison axiale entre l'arbre extérieur et le rétrécissement de l'élément tubulaire intermédiaire de l'ensemble monobloc comprennent un cordon de soudure entre la face d'appui de l'arbre extérieur et la portée circulaire du rétrécissement de l'élément tubulaire intermédiaire.

Pour des raisons de sécurité, il est nécessaire d'avoir des moyens de sécurité de la liaison en rotation entre l'arbre intérieur et l'élément tubulaire intermédiaire, afin de garantir la transmission du couple en cas de dégradation de l'élément élastique. Ces moyens de sécurité comprennent :
- une forme agencée sur la face extérieure de l'arbre intérieur ; et
- une forme qui est agencée sur la face intérieure de l'élément tubulaire intermédiaire et située du côté opposé à l'élément élastique aménagé dans un logement de l'élément tubulaire intermédiaire;
- les deux formes ayant des profils conjugués avec un jeu prédéterminé entre ces deux formes, de manière que les deux formes viennent en contact, et assurent la transmission du couple en cas de dégradation de l'élément élastique.

Avantageusement, les formes sur l'arbre intérieur et sur l'élément tubulaire intermédiaire sont caractérisées en ce que :
- la forme agencée sur la face extérieure de l'arbre intérieur consiste en deux parties circulaires diamétralement opposées qui sont raccordées l'une à l'autre par deux parties plates parallèles l'une par rapport à l'autre, et sensiblement perpendiculaires à l'axe de symétrie des deux parties circulaires ; et
- la forme agencée sur la face intérieure de l'élément tubulaire intermédiaire consiste en deux parties circulaires, et deux parties plates qui sont respectivement sensiblement complémentaires aux parties circulaires et aux parties plates de la face extérieure de l'arbre intérieur et avec des dimensions légèrement plus grandes de manière à obtenir le jeu prédéterminé entre ces deux formes.

Dans le but d'améliorer la sécurité, il est prévu selon l'invention des moyens de sécurité de la liaison axiale dans la direction souhaitée, entre l'arbre intérieur et le rétrécissement de l'élément tubulaire intermédiaire, afin d'empêcher l'extraction de cet accouplement en cas de dégradation de l'élément élastique.

Ces moyens de sécurité de la liaison axiale comprennent une déformation, à une extrémité de l'arbre intérieur, qui coopère et s'applique contre une forme évasée aménagée sur la face intérieure du rétrécissement de l'élément tubulaire intermédiaire.

Tout en restant dans le cadre de l'invention, l'élément tubulaire intermédiaire peut être réalisé de différentes manières. Dans une première réalisation, le corps de l'élément tubulaire intermédiaire, qui est relié à l'arbre intérieur par l'élément élastique, est un tube de section circulaire.

Dans une autre réalisation, le corps de l'élément tubulaire intermédiaire, qui est relié à l'arbre intérieur par l'élément élastique, est un tube dont la section a deux parties circulaires diamétralement opposées, qui sont raccordées l'une à l'autre par deux parties plates parallèles l'une par rapport à l'autre, et sensiblement perpendiculaires à l'axe de symétrie des deux parties circulaires, de manière que l'élément élastique ait l'épaisseur voulue.

Dans une autre réalisation, le corps de l'élément tubulaire intermédiaire, qui est relié à l'arbre intérieur par l'élément élastique, est un tube dont la section a deux parties circulaires diamétralement opposées, qui sont raccordées l'une à l'autre par deux parties concaves, de manière que l'élément élastique ait l'épaisseur voulue.

Il est particulièrement intéressant d'appliquer le dispositif d'accouplement permanent selon l'invention à une colonne de direction de véhicule automobile. Dans ce cas, l'arbre intérieur est un tube de l'arbre de direction et l'arbre extérieur est l'extrémité de raccordement de la mâchoire d'un joint de cardan.

Le dispositif d'accouplement permanent selon l'invention présente ainsi l'avantage d'avoir une structure très simple à réaliser, avec une garantie de fabrication de qualité lorsqu'elle est réalisée en très grande série, ce qui est le cas de l'industrie automobile. Ceci est particulièrement intéressant pour l'obtention de l'élément tubulaire intermédiaire, ainsi que pour la réalisation de l'assemblage de l'arbre extérieur et de l'élément tubulaire intermédiaire intégré dans l'ensemble monobloc.

D'autres caractéristiques et avantages de l'invention ressortiront de la description qui va suivre, donnée à titre d'exemples nullement limitatifs, en référence aux dessins annexés sur lesquels :
- la figure 1 est une vue axiale en demi-coupe de l'ensemble du dispositif d'accouplement selon l'invention ;
- la figure 1A est une vue partielle agrandie de la figure 1 ;
- la figure 2 est une coupe suivant le plan II-II de la figure 1 ;
- la figure 2A est une vue partielle agrandie de la figure 2 d'une variante de réalisation ;
- la figure 3 est une vue en perspective du côté de l'arbre extérieur, du mode de réalisation représenté sur la figure 1 ;
- la figure 4 est une vue en perspective du côté de l'arbre intérieur, du mode de réalisation représenté sur la figure 1 ;
- la figure 5 est une vue axiale en demi-coupe d'une partie du dispositif représenté à la figure 1 avant assemblage avec l'arbre extérieur ;
- la figure 6 est une coupe suivant le plan VI-VI de la figure 5 ;
- la figure 7 est une coupe suivant le plan VII-VII de la figure 5 ;
- la figure 8 est une variante de réalisation représentée suivant le plan de coupe de la figure 6 ; et
- la figure 9 est une vue axiale en coupe d'un autre mode de réalisation de l'invention.

Le dispositif d'accouplement permanent selon l'invention est destiné à raccorder deux arbres référencés 1 et 2 qui sont aptes à tourner suivant un axe commun X-X, et qui comportent des moyens de liaison élastiques. Le mode de réalisation représenté sur les figures se rapporte à un dispositif d'accouplement permanent plus particulièrement destiné à une colonne de direction de véhicule automobile, l'arbre extérieur 1 étant l'extrémité tubulaire de raccordement de la mâchoire d'un joint de cardan, et l'arbre intérieur 2 étant un tube appartenant à l'arbre de direction.

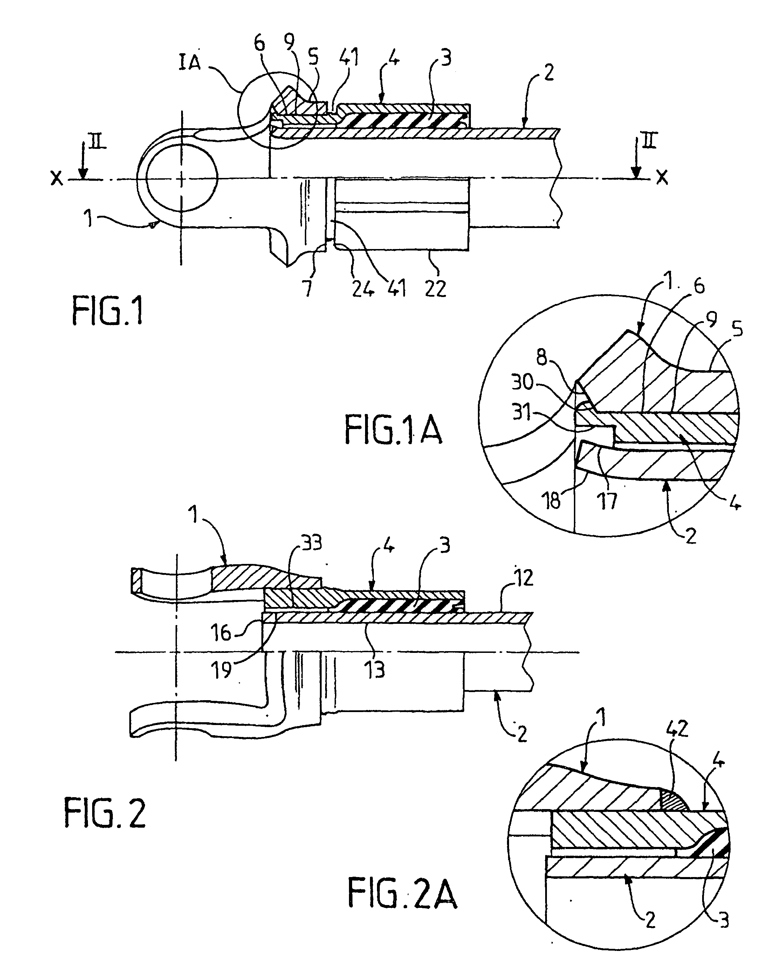

Comme on peut le voir sur les figures 1, 2, 3 et 4, le dispositif d'accouplement permanent des deux arbres 1 et 2 selon l'invention comporte :
- un ensemble tubulaire intermédiaire qui consiste en un élément tubulaire intermédiaire 4 et, qui est disposé entre l'arbre extérieur 1 et l'arbre intérieur 2 ;
- des moyens de liaison élastique qui sont constitués par un élément élastique 3, qui est disposé entre l'arbre intérieur 2 et l'élément tubulaire intermédiaire 4 ; et
- des moyens de liaison en rotation entre l'arbre extérieur 1 et l'élément tubulaire intermédiaire 4.

L'élément élastique 3 est directement solidarisé avec l'arbre intérieur 2, et avec l'élément tubulaire intermédiaire 4.

L'arbre extérieur 1 est tubulaire, avec une face extérieure 5 et une face intérieure 6 circulaire. Cette face intérieure 6, dite zone femelle, est munie d'une denture 9. Une forme évasée 8 est aménagée à l'extrémité de la face intérieure 6, qui est située du côté de la mâchoire du joint de cardan. L'arbre extérieur 1 possède à l'autre extrémité de la face intérieure 6, une face d'appui 7 qui est sensiblement perpendiculaire à ladite face intérieure 6.

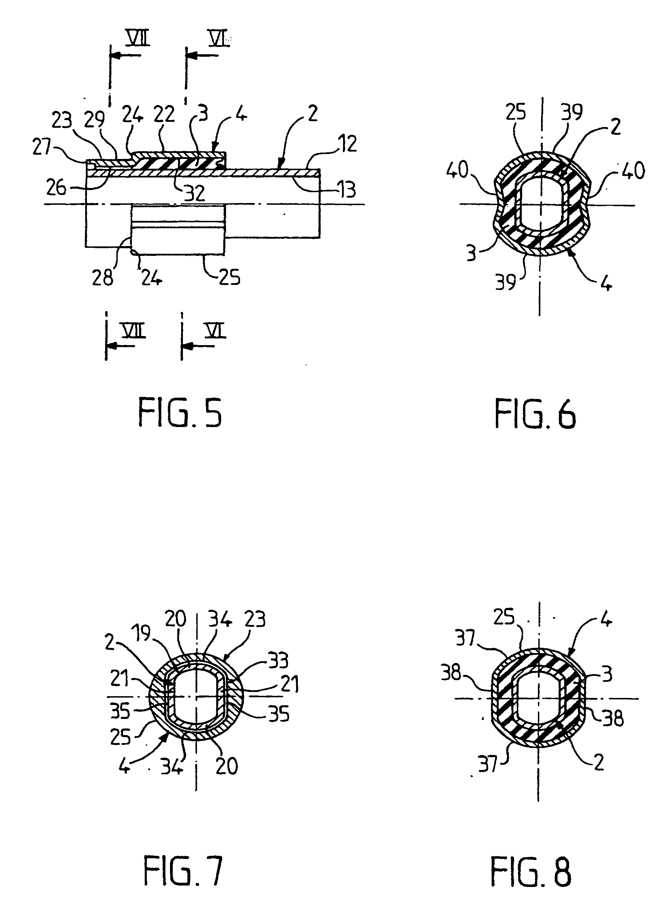

Comme cela est représenté notamment sur la figure 5, l'élément tubulaire intermédiaire 4 est constitué d'un corps 22, avec un rétrécissement circulaire à l'une de ses extrémités, qui constitue une portée ou zone mâle 23. Cette portée ou zone mâle 23 est munie d'une denture 29, qui a un profil conjugué avec celui de la denture 9 de la face intérieure 6 ou zone femelle de l'arbre extérieur 1. Le corps 22 comporte un logement 32, qui est destiné à recevoir l'élément élastique 3. L'élément tubulaire intermédiaire 4 a ainsi un épaulement 24 à l'extrémité 28 de la portée 23, dont l'autre extrémité est référencée 27.

La face extérieure 25 du corps 22 de l'élément tubulaire intermédiaire 4 ainsi que la face intérieure 26 du rétrécissement circulaire ont des profils, qui seront décrits ci-après suivant les différents modes de réalisation de l'invention.

L'arbre intérieur 2 a une face extérieure 12, et une face intérieure 13, qui seront décrites ci-après.

Les moyens de liaison en rotation entre l'arbre extérieur 1 et l'élément tubulaire intermédiaire 4 consistent en un emmanchement du rétrécissement circulaire avec sa portée ou zone mâle 23 de l'élément tubulaire intermédiaire 4, dans la face intérieure ou zone femelle 6 de l'arbre extérieur 1, dont les dimensions et les dentures respectives 29 et 9 de forme conjuguée coopèrent l'une avec l'autre.

Le dispositif d'accouplement permanent selon l'invention comporte des moyens de liaison axiale entre l'arbre extérieur 1 et l'élément tubulaire intermédiaire 4, qui sont représentés notamment sur les figures 1, 1A et 5. Les moyens de liaison axiale entre l'arbre extérieur 1 et l'élément tubulaire intermédiaire 4 consistent en :
- l'épaulement 24 qui est aménagé dans l'élément tubulaire intermédiaire 4, entre l'extrémité 28 de la zone mâle ou portée 23, et le corps 22, sur lequel vient s'appliquer la face d'appui 7 de l'arbre extérieur 1 ; et
- une déformation 30 à l'extrémité libre 27 de la zone mâle ou portée 23 qui coopère et s'applique par sertissage contre une forme évasée 8 aménagée sur la face intérieure 6 de l'arbre extérieur 1.

Dans une variante de réalisation de l'invention, la face d'appui 7 de l'arbre extérieur 1 vient s'appliquer contre un bourrelet 41 réalisé à côté de l'épaulement 24 du corps 22. Ces réalisations donnent toute garantie de l'accouplement permanent suivant l'invention dans le sens axial.

Dans le cas de la variante de réalisation représentée sur la figure 2A, les moyens de liaison en rotation et les moyens de liaison axiale entre l'arbre extérieur 1 et l'élément tubulaire intermédiaire 4 comprennent un cordon de soudure 42. Le cordon de soudure 42 est aménagé entre la face d'appui 7 de l'arbre extérieur 1 et l'élément tubulaire intermédiaire 4.

Selon l'invention le dispositif d'accouplement permanent comporte des moyens de sécurité de la liaison en rotation entre l'arbre intérieur 2, et l'élément tubulaire intermédiaire 4, qui est représenté sur les figures 2, 3, 4, 5 et 7. Ces moyens de sécurité sont réalisés pour garantir la transmission du couple en cas de dégradation de l'élément élastique. Les moyens de sécurité de la liaison en rotation entre l'arbre intérieur 2 et l'élément tubulaire intermédiaire 4 consistent en :
- une forme 19, qui est agencée sur la face extérieure 12 de l'arbre intérieur 2 ; et
- une forme 33 agencée sur la face intérieure 26 de l'élément tubulaire intermédiaire 4, qui est située du côté opposé à l'élément élastique 3 aménagé dans un logement 32 de l'élément tubulaire intermédiaire 4.

Les formes 19 et 33 ont des profils conjugués avec un certain jeu entre ces deux formes, de manière que les deux formes 19 et 33 viennent en contact et assurent la transmission du couple, en cas de dégradation de l'élément élastique 3.

La forme 19 qui est agencée sur la face 12 de l'arbre intérieur 2, consiste en deux parties circulaires 20, diamétralement opposées, qui sont raccordées l'une à l'autre par deux parties plates 21 parallèles l'une par rapport à l'autre, et sensiblement perpendiculaires à l'axe de symétrie des deux parties circulaires 20. La forme 33, qui est agencée sur la face intérieure 26 de l'élément tubulaire intermédiaire 4, consiste en deux parties circulaires 34 et en deux parties plates 35, qui sont disposées de manière identique à la forme extérieure de l'arbre intérieur 2, avec des dimensions légèrement plus grandes de manière à obtenir le jeu nécessaire entre ces deux formes 19 et 33.

De plus, le dispositif d'accouplement permanent selon l'invention comporte des moyens de sécurité de la liaison axiale dans la direction souhaitée entre l'arbre intérieur 2 et l'élément tubulaire intermédiaire 4, afin d'empêcher l'extraction de cet accouplement en cas de dégradation de l'élément élastique 3. Ces moyens de sécurité sont plus particulièrement représentés sur les figures 1A et 2. Les moyens de sécurité de la liaison axiale dans la direction souhaitée, entre l'arbre intérieur 2 et l'élément tubulaire intermédiaire 4 consistent en une déformation 17, qui est aménagée à l'extrémité 16 de l'arbre intermédiaire 2 et qui coopère et s'applique contre une forme évasée 31 aménagée sur la face intérieure 26 de l'élément tubulaire intermédiaire 4.

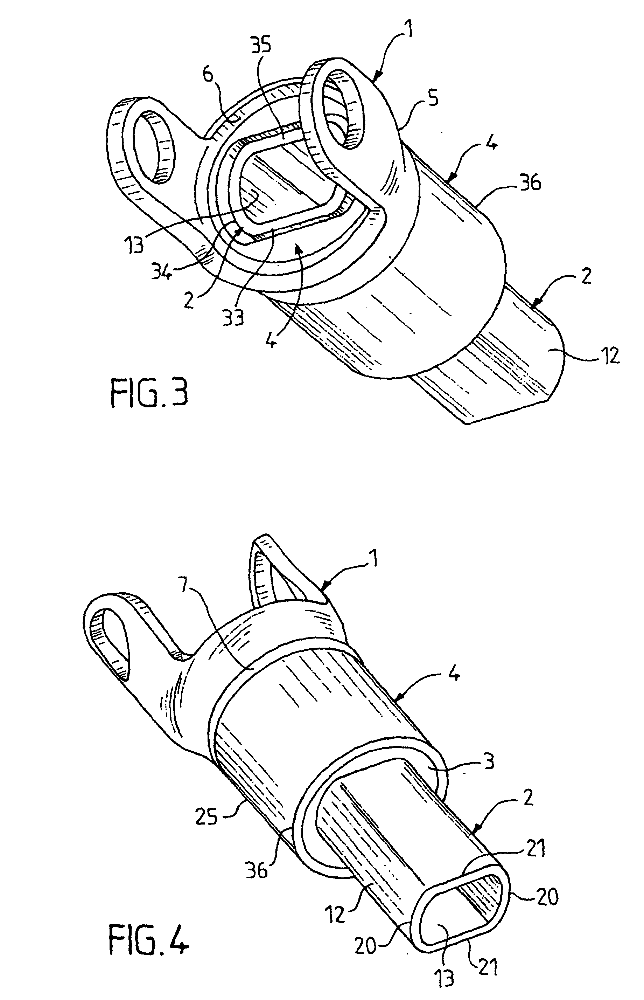

Afin de répondre à différents cas de réalisation et d'utilisation du dispositif d'accouplement permanent selon l'invention, l'élément tubulaire intermédiaire 4 peut être obtenu de différentes façons. Dans le cas de réalisations représentées sur les figures 3, 4 et 7, le corps de l'élément tubulaire intermédiaire 4, qui est relié à l'arbre intérieur 2 par l'élément élastique 3, est un tube de section circulaire 36.

Dans le cas de réalisation de l'invention représenté sur la figure 8, le corps 22 de l'élément tubulaire intermédiaire 4, qui est relié à l'arbre intérieur 2 par l'élément élastique 3, est un tube dont la section a deux parties circulaires 37 diamétralement opposées. Ces deux parties circulaires 37 sont raccordées l'une à l'autre par deux parties plates 38, qui sont parallèles l'une par rapport à l'autre, et qui sont sensiblement perpendiculaires à l'axe de symétrie des deux parties circulaires 37. Le corps 22 est réalisé de manière que l'élément élastique 3 ait l'épaisseur voulue.

Dans le mode de réalisation de l'invention représenté sur la figure 6, le corps 22 de l'élément tubulaire intermédiaire 4, qui est relié à l'arbre intérieur 2 par l'élément élastique 3, est un tube dont la section a deux parties circulaires 39 diamétralement opposées, qui sont raccordées l'une à l'autre par deux parties concaves 40, de manière que l'élément élastique 3 ait l'épaisseur voulue.

La différence des formes entre les modes de réalisation des figures 6 et 8 a pour but d'avoir des caractéristiques différentes au niveau de la rigidité de l'accouplement.

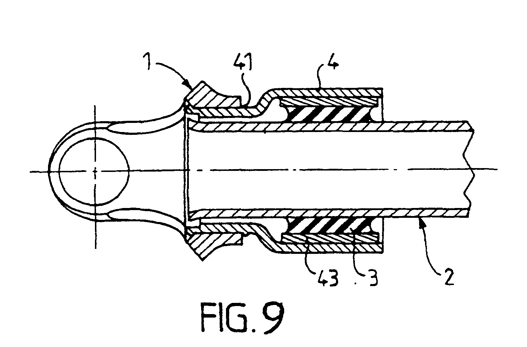

Le dispositif d'accouplement permanent représenté sur la figure 9 est constitué par un ensemble tubulaire intermédiaire, qui comporte un élément tubulaire intermédiaire 4, et un élément tubulaire supplémentaire 43. L'élément tubulaire supplémentaire 43 peut être en métal, en plastique ou en un autre matériau.

L'élément tubulaire intermédiaire 4 et l'élément tubulaire supplémentaire 43 sont solidaires l'un avec l'autre. Dans ce type de réalisation, l'élément élastique 3 est directement solidarisé avec l'élément tubulaire supplémentaire 43 et avec l'arbre intérieur 2 de manière à constituer un sous-ensemble monobloc. Ce sous-ensemble monobloc est ensuite solidarisé avec l'élément tubulaire intermédiaire 4 pour constituer un ensemble monobloc. Ce type d'architecture est particulièrement intéressant pour la fabrication en grande série.

Le procédé de montage du dispositif d'accouplement permanent selon l'invention, comportant deux arbres 1 et 2 aptes à tourner suivant un axe commun X-X et des moyens de liaison élastiques 3 est caractérisé en ce que :
- les moyens de liaison élastiques sont constitués par un élément élastique 3, qui est disposé entre l'arbre intérieur 2 et un élément tubulaire intermédiaire 4 ;
- l'élément élastique 3 est solidarisé en étant adhérisé à l'arbre intérieur 2 et à l'élément tubulaire intermédiaire 4 de manière à constituer un ensemble monobloc ;
- l'ensemble monobloc est monté dans l'arbre extérieur 1 et solidarisé avec ledit arbre extérieur afin d'assurer la liaison en rotation et la liaison axiale entre l'arbre extérieur 1 et l'ensemble monobloc ;
- une déformation 17 de l'extrémité 16 de l'arbre intérieur 2, du côté de l'arbre extérieur 1, est réalisée pour venir s'appliquer contre la forme évasée 31 sur la face intérieure 26 de l'élément intermédiaire 4, afin d'assurer la liaison axiale dans la direction souhaitée entre l'arbre intérieur 2 et l'élément tubulaire intermédiaire 4.

Dans un autré mode de réalisation, le procédé de montage est caractérisé en ce que :
- les moyens de liaison élastiques sont constitués par un élément élastique 3, qui est disposé entre l'arbre intérieur 2 et un élément tubulaire supplémentaire 43 ;
- l'élément élastique 3 est solidarisé en étant adhérisé à l'arbre intérieur 2, et à l'élément tubulaire supplémentaire 43 de façon à constituer un sous-ensemble monobloc ;
- le sous-ensemble monobloc est monté dans un élément tubulaire intermédiaire 4, de manière à constituer un ensemble monobloc ;
- l'ensemble monobloc est monté dans l'arbre extérieur 1 et solidarisé avec ledit arbre extérieur afin d'assurer la liaison en rotation et la liaison axiale entre l'arbre extérieur 1 et l'ensemble monobloc ;
- une déformation 17 de l'extrémité 16 de l'arbre intérieur 2, du côté de l'arbre extérieur 1, est réalisée pour venir s'appliquer contre la forme évasée 31 sur la face intérieure 26 de l'élément intermédiaire 4, afin d'assurer la liaison axiale dans la direction souhaitée entre l'arbre intérieur 2 et l'élément tubulaire intermédiaire 4.

Dans les deux procédés de montage précédents, le montage de l'ensemble monobloc et la solidarisation avec l'arbre extérieur 1 comportent les étapes suivantes :
- l'ensemble monobloc est monté dans l'arbre extérieur 1, en engageant la denture 29 de la zone mâle ou portée 23 de l'élément tubulaire intermédiaire 4 dans la denture 9 de la zone femelle
ou face intérieure 6 de l'arbre extérieur 1, pour venir en butée contre l'épaulement 24 de l'élément tubulaire intermédiaire 4, afin d'assurer la liaison en rotation entre l'arbre extérieur 1 et l'ensemble monobloc ;
- une déformation 30 est obtenue par sertissage à l'autre extrémité 27 de la zone mâle ou portée 23 de manière à venir s'appliquer contre une forme évasée 8 aménagée sur la face intérieure 6 de l'arbre extérieur 2, afin d'assurer la liaison axiale entre l'arbre extérieur 1 et l'ensemble monobloc.

Dans une variante de réalisation du procédé de montage de l'ensemble monobloc décrit ci-dessus, l'ensemble monobloc est monté dans l'arbre extérieur 1 pour venir en butée contre un bourrelet 41 de l'élément tubulaire intermédiaire 4.

Dans une autre variante de réalisation du procédé de montage de l'ensemble monobloc décrit ci-dessus, l'ensemble monobloc est monté dans l'arbre extérieur et un cordon de soudure 42 est aménagé entre l'arbre extérieur 1 et l'élément tubulaire intermédiaire 4, afin d'assurer la liaison en rotation et la liaison axiale entre l'arbre extérieur 1 et l'ensemble monobloc.

## Revendications

1. Dispositif d'accouplement permanent de deux arbres (1 et 2) aptes à tourner suivant un axe commun (X, X) qui comporte :
- un ensemble monobloc qui comprend :
. un ensemble tubulaire intermédiaire disposé entre l'arbre extérieur (1) et l'arbre intérieur (2) ; et
. un élément élastique (3) en une seule partie disposé entre l'arbre intérieur (2) et l'ensemble tubulaire intermédiaire, et étant directement solidarisé avec l'arbre intérieur (2), et avec l'ensemble tubulaire intermédiaire de manière à constituer l'ensemble monobloc,
- l'ensemble monobloc étant monté dans une face intérieure (6) de l'arbre extérieur (1) afin d'assurer une liaison en rotation et une liaison axiale entre l'arbre extérieur et l'ensemble monobloc
**caractérisé en ce que** :
- l'ensemble tubulaire intermédiaire est constitué par un élément tubulaire intermédiaire (4) en une seule partie, qui comporte un corps (22) entourant l'élément élastique (3) et un rétrécissement agencé à une première de ses extrémités en dehors dudit élément élastique (3) qui se prolonge jusqu'à la deuxième extrémité, ledit rétrécissement étant monté dans la face intérieure (6) de l'arbre extérieur (1) ;
- des moyens de liaison en rotation entre l'arbre extérieur (1) et ledit rétrécissement de l'élément tubulaire intermédiaire (4) de l'ensemble monobloc ;
- des moyens de liaison axiale entre l'arbre extérieur (1) et ledit rétrécissement de l'élément tubulaire intermédiaire (4) ;
- des moyens de sécurité de la liaison en rotation entre l'arbre intérieur (2) et ledit rétrécissement de l'élément tubulaire intermédiaire (4).

2. Dispositif d'accouplement permanent selon la revendication 1, **caractérisé en ce que** l'ensemble tubulaire intermédiaire comporte l'élément tubulaire intermédiaire (4) et un élément tubulaire supplémentaire (43) en une seule partie, qui sont solidaires l'un avec l'autre ; l'élément élastique (3) étant directement solidarisé avec l'élément tubulaire supplémentaire (43) et avec l'arbre intérieur (2) de manière à constituer un sous-ensemble monobloc, qui se monte dans le logement (32) du corps (22) de l'élément tubulaire intermédiaire (4).

3. Dispositif d'accouplement permanent selon l'une quelconque des revendications 1 et 2, **caractérisé en ce que** les moyens de liaison en rotation entre l'arbre extérieur (1) et l'ensemble monobloc comprennent un emmanchement du rétrécissement de l'élément tubulaire intermédiaire (4) dans l'arbre extérieur (1), une zone mâle ou portée circulaire (23) du rétrécissement de l'élément tubulaire intermédiaire (4) et une zone femelle ou face intérieure circulaire (6) de l'arbre extérieur (1) étant munies de dentures (29 et 9) de formes conjuguées qui coopèrent l'une avec l'autre.

4. Dispositif d'accouplement permanent selon l'une quelconque des revendications 1 et 2, **caractérisé en ce que** les moyens de liaison axiale entre l'arbre extérieur (1) et le rétrécissement de l'élément tubulaire intermédiaire (4) de l'ensemble monobloc comprennent :
- un épaulement (24) entre la portée circulaire (23) du rétrécissement et une portion de corps (22) de l'élément tubulaire intermédiaire (4), une face d'appui (7) de l'arbre extérieur (1) étant appliquée contre ledit épaulement ;
- une déformation (30) à une extrémité libre (27) de ladite portée circulaire (23) qui coopère et s'applique par sertissage contre une forme évasée (8) aménagée sur la face intérieure (6) de l'arbre extérieur (1) ; et
- ladite face d'appui (7) étant située à l'extrémité de la face intérieure circulaire (6) du côté du corps (22) de l'élément tubulaire intermédiaire (4), et ladite forme évasée (8) étant située à l'autre extrémité de ladite face intérieure circulaire (6).

5. Dispositif d'accouplement permanent selon l'une quelconque des revendications 1 et 2, **caractérisé en ce que** les moyens de liaison axiale entre l'arbre extérieur (1) et le rétrécissement de l'élément tubulaire intermédiaire (4) de l'ensemble monobloc comprennent :
- un bourrelet (41) aménagé sur une extrémité de la portée circulaire (23) du rétrécissement du côté de l'élément élastique (3), et sur lequel vient s'appliquer une face d'appui (7) de l'arbre extérieur (1) ;
- une déformation (30) à une extrémité libre (27) de ladite portée circulaire (23) qui coopère et s'applique par sertissage contre une forme évasée (8) aménagée sur la face intérieure (6) de l'arbre extérieur (1) ;et
- ladite face d'appui (7) étant située à l'extrémité de la face intérieure circulaire (6) du côté du corps (22) de l'élément tubulaire intermédiaire (4), et ladite forme évasée (8) étant située à l'autre extrémité de ladite face intérieure circulaire (6).

6. Dispositif d'accouplement permanent selon l'une quelconque des revendications 1 et 2, **caractérisé en ce que** les moyens de liaison en rotation et les moyens de liaison axiale entre l'arbre extérieur (1) et le rétrécissement de l'élément tubulaire intermédiaire (4) de l'ensemble monobloc comprennent un cordon de soudure (42) entre la face d'appui (7) de l'arbre extérieur (1) et la portée circulaire (23) du rétrécissement de l'élément tubulaire intermédiaire (4).

7. Dispositif d'accouplement permanent selon l'une quelconque des revendications 1 et 2, **caractérisé en ce que** les moyens de sécurité de la liaison en rotation entre l'arbre intérieur (2) et le rétrécissement de'élément tubulaire intermédiaire (4) de l'ensemble monobloc comprennent :
- une forme (19) agencée sur une face extérieure (12) de l'arbre intérieur (2) ; et
- une forme (33) agencée sur une face intérieure (26) du rétrécissement de l'élément tubulaire intermédiaire (4), qui est située du côté opposé à l'élément élastique (3) aménagé dans un logement (32) de l'élément tubulaire intermédiaire (4);
- les formes (19 et 33) ayant des profils conjugués avec un jeu prédéterminé entre ces deux formes, de manière à ce que les deux formes (19 et 33) viennent en contact et assurent la transmission du couple, en cas de dégradation de l'élément élastique (3) ou de valeur anormale dudit couple.

8. Dispositif d'accouplement permanent selon l'une quelconque des revendications 1 et 2, **caractérisé en ce qu'**il comporte des moyens de sécurité de la liaison axiale dans la direction souhaitée, entre l'arbre intérieur (2) et le rétrécissement de l'élément tubulaire intermédiaire (4).

9. Dispositif d'accouplement permanent selon la revendication 8, **caractérisé en ce que** les moyens de sécurité de la liaison axiale comprennent une déformation (17) à une extrémité (16) de l'arbre intérieur (2), qui coopère et s'applique contre une forme évasée (31) aménagée sur une face intérieure (26) du rétrécissement de l'élément tubulaire intermédiaire (4).

10. Dispositif d'accouplement permanent selon la revendication 7, **caractérisé en ce que** :
- la forme (19) agencée sur la face extérieure (12) de l'arbre intérieur (2) consiste en deux parties circulaires (20) diamétralement opposées qui sont raccordées l'une à l'autre par deux parties plates (21) parallèles l'une par rapport à l'autre, et sensiblement perpendiculaires à l'axe de symétrie des deux parties circulaires (20) ; et
- la forme (33) agencée sur la face intérieure (26) du rétrécissement de l'élément tubulaire intermédiaire (4) consiste en deux parties circulaires (34) et deux parties plates (35) qui sont respectivement sensiblement complémentaires aux parties circulaires et aux parties plates de la face extérieure (12) de l'arbre intérieur (2) et avec des dimensions légèrement plus grandes de manière à obtenir ledit jeu prédéterminé entre les formes (19 et 33).

11. Dispositif d'accouplement permanent selon la revendication 10, **caractérisé en ce que** le corps (22) de l'élément tubulaire intermédiaire (4) est un tube de section circulaire (36).

12. Dispositif d'accouplement permanent selon la revendication 10, **caractérisé en ce que** le corps (22) de l'élément tubulaire intermédiaire (4) est un tube dont la section a deux parties circulaires (37) diamétralement opposées, qui sont raccordées l'une à l'autre par deux parties plates (38) parallèles l'une par rapport à l'autre, et sensiblement perpendiculaires à l'axe de symétrie des deux parties circulaires (37), de manière que l'élément élastique (3) ait l'épaisseur voulue.

13. Dispositif d'accouplement permanent selon la revendication 10, **caractérisé en ce que** le corps (22) de l'élément tubulaire intermédiaire (4) est un tube dont la section a deux parties circulaires (39) diamétralement opposées, qui sont raccordées l'une à l'autre par deux parties concaves (40), de manière que l'élément élastique (3) ait l'épaisseur voulue.

14. Dispositif d'accouplement permanent selon l'une quelconque des revendications précédentes, **caractérisé en ce que** l'arbre intérieur (2) est un tube de l'arbre de direction d'une colonne de direction de véhicule automobile et l'arbre extérieur (1) est l'extrémité de raccordement de la mâchoire d'un joint de cardan.

## Patentansprüche

1. Vorrichtung zur permanenten Kopplung von zwei Wellen (1 und 2), die sich um eine gemeinsame Achse (X, X) drehen können, mit:
- einer einstückigen Einheit, die folgendes umfasst:
- eine rohrförmige Zwischeneinheit, die zwischen der äußeren Welle (1) und der inneren Welle (2) angeordnet ist, und
- ein einteiliges elastisches Element (3), das zwischen der inneren Welle (2) und der rohrförmigen Zwischeneinheit angeordnet ist und direkt mit der inneren Welle (2) und der rohrförmigen Zwischeneinheit verbunden ist, um die einstückige Einheit zu bilden,
- wobei die einstückige Einheit auf einer Innenfläche (6) der äußeren Welle (1) angebracht ist, um für eine Drehverbindung und eine axiale Verbindung zwischen der äußeren Einheit und der einstückigen Einheit zu sorgen,
**dadurch gekennzeichnet, dass**
- die rohrförmige Zwischeneinheit aus einem einteiligen, rohrförmigen Zwischenelement (4) besteht, das einen Körper (22), der das elastische Element (3) umgibt, und eine Verengung umfasst, die an einem ersten Ende seiner Enden außerhalb des elastischen Elements (3) ausgebildet ist, das sich bis zum zweiten Ende fortsetzt, wobei die Verengung in der Innenfläche (6) der äußeren Welle (1) angeordnet ist,
- Drehverbindungsmittel zwischen der äußeren Welle (1) und der Verengung des rohrförmigen Zwischenelements (4) der einstückigen Einheit,
- axiale Verbindungsmittel zwischen der äußeren Welle (1) und der Verengung des rohrförmigen Zwischenelements (4),
- Sicherungsmittel für die Drehverbindung zwischen der inneren Welle (2) und der Verengung des rohrförmigen Zwischenelements (4).

2. Vorrichtung zur permanenten Kopplung nach Anspruch 1, **dadurch gekennzeichnet, dass** die rohrförmige Zwischeneinheit das rohrförmige Zwischenelement (4) und ein einteiliges, zusätzliches, rohrförmiges Element (43) umfasst, die miteinander verbunden sind, wobei das elastische Element (3) direkt mit dem zusätzlichen, rohrförmigen Element (43) und mit der inneren Welle (2) verbunden ist, um eine einstückige Untereinheit zu bilden, die in der Ausnehmung (32) des Körpers (22) des zusätzlichen, rohrförmigen Elements (4) angebracht wird.

3. Vorrichtung zur permanenten Kopplung nach einem der Ansprüche 1 und 2, **dadurch gekennzeichnet, dass** die Drehverbindungsmittel zwischen der äußeren Welle (1) und der einstückigen Einheit ein Einsteckende der Verengung des rohrförmigen Zwischenelements (4) in der äußeren Welle (1) umfassen, wobei ein kreisförmiger, männlicher oder tragender Bereich (23) der Verengung des rohrförmigen Zwischenelements (4) und ein weiblicher Bereich oder eine kreisförmige, innere Fläche (6) der äußeren Welle (1) mit Zahnungen (29 und 9) mit konjugierten Formen versehen sind, die zusammenwirken.

4. Vorrichtung zur permanenten Kopplung nach einem der Ansprüche 1 und 2, **dadurch gekennzeichnet, dass** die axialen Verbindungsmittel zwischen der äußeren Welle (1) und der Verengung des rohrförmigen Zwischenelements (4) der einstückigen Einheit folgendes umfassen:
- eine Schulter (24) zwischen der kreisförmigen, tragenden Fläche (23) der Verengung und einem Teil des Körpers (22) des rohrförmigen Zwischenelements (4), wobei eine Auflagefläche (7) der äußeren Welle (1) an der Schulter anliegt,
- eine Deformation (30) an einem freien Ende (27) der kreisförmigen, tragenden Fläche (23), die durch Klemmwirkung mit einer konisch erweiterten Form (8) zusammenwirkt und daran anliegt, die auf der Innenfläche (6) der äußeren Welle (1) ausgebildet ist, und
- wobei die Auflagefläche (7) an dem Ende der kreisförmigen Innenfläche (6) auf der Seite des Körpers (22) des rohrförmigen Zwischenelements (4) liegt und die konisch erweiterte Form (8) am anderen Ende der kreisförmigen Innenfläche (6) liegt.

5. Vorrichtung zur permanenten Kopplung nach einem der Ansprüche 1 und 2, **dadurch gekennzeichnet, dass** die axialen Verbindungsmittel zwischen der äußeren Welle (1) und der Verengung des rohrförmigen Zwischenelements (4) der einstückigen Einheit folgendes umfassen:
- einen Wulst (41), der an einem Ende der kreisförmigen, tragenden Fläche (23) der Verengung auf der Seite des elastischen Elements (3) ausgebildet ist und an dem eine Auflagefläche (7) der äußeren Welle (1) anliegt,
- eine Deformation (30) an einem freien Ende (27) der kreisförmigen, tragenden Fläche (23), die durch Klemmwirkung mit einer konisch erweiterten Form (8) zusammenwirkt und daran anliegt, die auf der Innenfläche (6) der äußeren Welle (1) ausgebildet ist, und
- wobei die Auflagefläche (7) an dem Ende der kreisförmigen Innenfläche (6) auf der Seite des Körper (22) des rohrförmigen Zwischenelements (4) liegt und die konisch erweiterte Form (8) am anderen Ende der kreisförmigen Innenfläche (6) liegt.

6. Vorrichtung zur permanenten Kopplung nach einem der Ansprüche 1 und 2, **dadurch gekennzeichnet, dass** die Drehverbindungsmittel und die axialen Verbindungsmittel zwischen der äußeren Welle (1) und der Verengung des rohrförmigen Zwischenelements (4) der einstückigen Einheit eine Schweißnaht (42) zwischen der Auflagefläche (7) der äußeren Welle (1) und der kreisförmigen, tragenden Fläche (23) der Verengung des rohrförmigen Zwischenelements (4) umfassen.

7. Vorrichtung zur permanenten Kopplung nach einem der Ansprüche 1 und 2, **dadurch gekennzeichnet, dass** die Sicherungsmittel für die Drehverbindung zwischen der inneren Welle (2) und der Verengung des rohrförmigen Zwischenelements (4) der einstückigen Einheit folgendes umfassen:
- eine Form (19), die auf der Außenfläche (12) der inneren Welle (2) ausgebildet ist, und
- eine Form (33), die auf einer Innenfläche (26) der Verengung des rohrförmigen Zwischenelements (4) ausgebildet ist, die auf der Seite gegenüber des elastischen Elements (3) liegt, das in einer Aufnahme (32) des rohrförmigen Zwischenelements (4) aufgenommen ist,
- wobei die Formen (19 und 33) konjugierte Profile mit einem vorbestimmten Spiel zwischen diesen zwei Formen aufweisen, so dass die zwei Formen (19 und 33) in Kontakt kommen und die Übertragung des Drehmoments im Falle einer Schädigung des elastischen Elements (3) oder eines anomalen Wertes des Drehmoments gewährleisten.

8. Vorrichtung zur permanenten Kopplung nach einem der Ansprüche 1 und 2, **dadurch gekennzeichnet, dass** sie Mittel zur Sicherung der axialen Verbindung in der erwünschten Richtung zwischen der inneren Welle (2) und der Verengung des rohrförmigen Zwischenelements (4) umfasst.

9. Vorrichtung zur permanenten Kopplung nach Anspruch 8, **dadurch gekennzeichnet, dass** die Mittel zur Sicherung der axialen Verbindung eine Deformation (17) an einem Ende (16) der inneren Welle (2) umfassen, die mit einer konisch erweiterten Form (31) zusammenwirkt und daran anliegt, die auf der Innenfläche (26) der Verengung des rohrförmigen Zwischenelements (4) ausgebildet ist.

10. Vorrichtung zur permanenten Kopplung nach Anspruch 7, **dadurch gekennzeichnet, dass**:
- die auf der Außenfläche (12) der inneren Welle (2) ausgebildete Form (19) aus zwei diametral gegenüberliegenden, kreisförmigen Teilen (20) besteht, die durch zwei zueinander parallele und zu der Symmetrieachse der zwei kreisförmigen Teile (20) im Wesentlichen senkrechte, flache Teile (21) miteinander verbunden sind, und
- die auf der Innenfläche (26) der Verengung des rohrförmigen Zwischenelements (4) ausgebildete Form aus zwei kreisförmigen Teilen (34) und zwei flachen Teilen (35) besteht, die jeweils im Wesentlichen komplementär zu den kreisförmigen Teilen und den flachen Teilen der Außenfläche (12) der inneren Welle (2) sind und geringfügig größere Dimensionen aufweisen, um das vorbestimmte Spiel zwischen den Formen (19 und 33) zu erhalten.

11. Vorrichtung zur permanenten Kopplung nach Anspruch 10, **dadurch gekennzeichnet, dass** der Körper (22) des rohrförmigen Zwischenelements (4) ein Rohr mit kreisförmigem Querschnitt (36) ist.

12. Vorrichtung zur permanenten Kopplung nach Anspruch 10, **dadurch gekennzeichnet, dass** der Körper (22) des rohrförmigen Zwischenelements (4) ein Rohr ist, dessen Querschnitt zwei diametral gegenüberliegende, kreisförmige Teile (37) aufweist, die miteinander durch zwei zueinander parallele und zu der Symmetrieachse der zwei kreisförmigen Teile (37) im Wesentlichen senkrechte, flache Teile (38) verbunden sind, so dass das elastische Element (3) die gewünschte Dicke hat.

13. Vorrichtung zur permanenten Kopplung nach Anspruch 10, **dadurch gekennzeichnet, dass** der Körper (22) des rohrförmigen Zwischenelements (4) ein Rohr ist, dessen Querschnitt zwei diametral gegenüberliegende, kreisförmige Teile (39) aufweist, die miteinander über zwei konkave Teile (40) verbunden sind, so dass das elastische Element (3) die gewünschte Dicke hat.

14. Vorrichtung zur permanenten Kopplung nach einem der vorhergehenden Ansprüche, **dadurch gekennzeichnet, dass** die innere Welle (2) ein Rohr der Lenkwelle einer Lenksäule eines Kraftfahrzeugs ist und die äußere Welle (1) das Anschlussende der Backe einer Kardankupplung ist.

## Claims

1. A permanent coupling device of two shafts (1 and 2) fitted to rotate about a common axis (X, X) which allows :
- an one-piece assembly which comprises :
· an intermediate tubular assembly disposed between the outer shaft (1) and the inner shaft (2) ; and
. an one-piece elastic member (3) disposed between the inner shaft (2) and the intermediate tubular assembly, and being attached directly to the inner shaft (2), and to the intermediate tubular assembly so as to constitute the one-piece assembly,
- the one-piece assembly being mounted in an inside face (6) of the outer shaft (1) to assure a rotational connection and an axial connection between the outer shaft and the one-piece assembly ;
**characterized in that** :
- the intermediate tubular assembly consists in an one-piece intermediate tubular member (4), which allows a body (22) surrounding the elastic member (3) and a constriction arranged at a first one of its ends outside said elastic member (3) which extends up to the second end, said constriction being mounted in the inside face (6) of the outer shaft (1) ;
- rotational connection means between the outer shaft (1) and said constriction of the intermediate tubular member (4) of the one-piece assembly ;
- axial connection means between the outer shaft (1) and said constriction of the intermediate tubular member (4) ;
- safety means for the rotational connection between the inner shaft (2) and said constriction of the intermediate tubular member (4).

2. A permanent coupling device according to the claim 1, **characterized in that** the intermediate tubular assembly allows the intermediate tubular member (4) and an one-piece tubular additional assembly (43) in only one part, which are fastened to each other ; the elastic member (3) being fastened directly to the additional tubular member (43) and to the inner shaft (2) so as to constitute an one-piece subassembly, which adapts in the housing (32) of the body (22) of the intermediate tubular member (4).

3. A permanent coupling device according to any one of claims 1 and 2, **characterized in that** the rotational connecting means between the outer shaft (1) and the one-piece assembly consist in an interference fit of the constriction of the intermediate tubular member (4) in the outer shaft (1), a male area or bearing surface (23) of the constriction of the intermediate tubular member (4) and a female area or inside face (6) of the outer shaft (1) being provided with teeth (29 and 9) of conjugate shapes that cooperate with each other.

4. A permanent coupling device according to any one of claims 1 and 2, **characterized in that** the axial connecting means between the outer shaft (1) and the constriction of the intermediate tubular member (4) of the one-piece assembly comprise :
- a shoulder (24) between the circular bearing surface (23) of the constriction and a body part (22) of the intermediate tubular member (4), a bearing face (7) of the outer shaft (1) being pressed on said shoulder ;
- a deformation (30) at another end (27) of said circular bearing surface (23), which cooperates with and is pressed by crimping against a divergent shape (8) made on the inside face (6) of the outer shaft (1) ; and
- said bearing face (7) being located at the end of the circular inside face (6) on the body (22) of the intermediate tubular member (4), and said divergent shape (8) being located at the other end of said circular inside face (6).

5. A permanent coupling device according to any one of claims 1 and 2, **characterized in that** the axial connecting means between the outer shaft (1) and the constriction of the intermediate tubular member (4) of the one-piece assembly comprise:
- a bead (41) made on the end of the circular bearing surface (23) of the constriction on the elastic member (3), and against which a bearing face (7) of the outer shaft (1) is pressed ;
- a deformation (30) at a free end (27) of said circular bearing surface (23) that cooperates with and is pressed by crimping against a divergent shape (8) made on the inside face (6) of the outer shaft (1) ; and
- said bearing face (7) being located at the end of the circular inside face (6) on the body (22) of the intermediate tubular member (4), and said divergent shape (8) being situated at the other end of said circular inside face (6).

6. A permanent coupling device according to any one of claims 1 and 2, **characterized in that** the rotational connection means and the axial connection means between the outer shaft (1) and the constriction of the intermediate tubular member (4) of the one-piece assembly comprise a bead weld (42) between the bearing face (7) of the outer shaft (1) and the circular bearing surface (23) of the constriction of the intermediate tubular member (4).

7. A permanent coupling device according to any one of claims 1 and 2, **characterized in that** the safety means for the rotational connection between the inner shaft (2) and the constriction of the intermediate tubular member (4) of the one-piece assembly comprise:
- a shape (19) made on an outside face (12) of the inner shaft (2) ; and
- a shape (33) made on an inside face (26) of the constriction of the intermediate tubular member (4), which is situated of the side opposite the elastic member (3) made in a housing (32) of the intermediate tubular member (4) ;
- the shapes (19 and 33) having conjugate profiles with a predetermined clearance between these two shapes, so that the two shapes (19 and 33) come into contact and assure to transmit torque in the event of degradation of the elastic member (3) or of abnormal value of said torque.

8. A permanent coupling device according to any one of claims 1 and 2, **characterized in that** it comprises safety means of the axial connection in the required direction, between the inner shaft (2) and the constriction of the intermediate tubular member (4).

9. A permanent coupling device according to the claim 8, **characterized in that** the safety means of the axial connection comprise a deformation (17) at an end (16) of the inner shaft (2), that cooperates with and is pressed against a divergent shape (31) made on an inside face (26) of the constriction of the intermediate tubular member (4).

10. A permanent coupling device according to the claim 7, **characterized in that**:
- the shape (19) made on the outside face (12) of the inner shaft (2) has two diametrically opposite circular portions (20) which are joined together by two parallel flat portions (21), and substantially perpendicular to the axis of symmetry of the two circular portions (20) ; and
- the shape (33) made on the inside face (26) of the intermediate tubular member (4) consist in two circular portions (34) and two flat portions (35) which are respectively substantially complementary to the circular portions and flat portions to the outside face (12) of the inner shaft (2) and with slightly greater dimensions so as to obtain said predetermined clearance between the shapes (19 and 33).

11. A permanent coupling device according to the claim 10, **characterized in that** the body (22) of the intermediate tubular member (4) is a circular section tube (36).

12. A permanent coupling device according to the claim 10, **characterized in that** the body (22) of the intermediate tubular member (4) is a tube the section of which has two diametrically opposite circular portions (37), which are joined together by two parallel flat portions (38), and substantially perpendicular to an axis of symmetry of the two circular portions (37), so that the elastic member (3) has the desired thickness.

13. A permanent coupling device according to the claim 10, **characterized in that** the body (22) of the intermediate tubular member (4) is a tube the section of which has two diametrically opposite circular portions (39), which are joined together by two concave portions (40), in such a way that the elastic member (3) has the desired thickness.

14. A permanent coupling device according to any one of preceding claims, **characterized in that** the inner shaft (2) is a tube of the steering shaft of an automobile vehicle steering column and the outer shaft (1) is the connection end of the yoke of a universal joint.
